# FASCICULE DE BREVET EUROPEEN

(11) **EP 3 122 627 B1**
(45) Date de publication et mention de la délivrance du brevet: **10.01.2018**
(21) Numéro de dépôt: 15717024.2
(22) Date de dépôt: 20.03.2015
(51) Int. Cl.: B64C 27/12, F16H 3/72

(54) **ENSEMBLE DE TRANSMISSION POUR AERONEF ET HELICOPTERE**
GETRIEBEANORDNUNG FÜR EIN FLUGZEUG UND EINEN HUBSCHRAUBER
TRANSMISSION ASSEMBLY FOR AN AIRCRAFT AND A HELICOPTER

(30) Priorité: 27.03.2014 FR 1452615
(43) Date de publication de la demande: 01.02.2017
(73) Titulaire: Safran Helicopter Engines, 64510 Bordes (FR)
(72) Inventeur: BEDDOK, Stéphane, F-64000 Pau (FR); BAZET, Jean-Michel, F-64110 Gelos (FR)
(74) Mandataire: Joanny, Damien Henri Xavier
(86) Numéro de dépôt international: PCT/FR2015/050707
(87) Numéro de publication internationale: WO 2015/145046

(56) Documents cités:
- EP-A1- 1 145 896
- EP-A2- 2 404 775
- WO-A1-2009/118298

## Description

### DOMAINE DE L'INVENTION

Le présent exposé concerne un ensemble de transmission pour aéronef ainsi qu'un hélicoptère comprenant un tel ensemble.

Un tel ensemble de transmission peut être utilisé pour régler indépendamment la vitesse de rotation d'un moteur et d'un récepteur de couple afin d'optimiser le régime de chacun d'entre eux. Ceci est notamment utile dans le domaine de l'aéronautique et particulièrement dans celui des hélicoptères.

### ETAT DE LA TECHNIQUE ANTERIEURE

Dans un hélicoptère conventionnel, il est habituel de lier la ou les turbines à gaz de l'aéronef aux équipements prélevant de la puissance mécanique comme la boîte de transmission principale (BTP), l'alternateur ou encore le compresseur de charge. Dans un tel cas, le régime de la turbine à gaz est imposé par les équipements auxquels elle est liée : ceci est problématique car ce régime imposé ne correspond pas nécessairement à un optimum énergétique du système complet (la turbine à gaz ou le récepteur).

En particulier, dans le cas du groupe auxiliaire de puissance (également appelé APU pour « auxiliary power unit »), certains équipements qui sont liés à l'APU présentent des régimes variables qui dépendent de leur sollicitation : ceci entraîne pour l'APU un régime imposé variable qui nuit à son fonctionnement régulier et qui est donc préjudiciable pour sa consommation.

La propulsion même des hélicoptères est également concernée par cette problématique. En effet, les turbomachines entraînent le rotor principal de l'hélicoptère par l'intermédiaire de la boîte de transmission principale (BTP) : la vitesse de rotation du rotor principal impose donc, au rapport de multiplication de la BTP près, la vitesse de rotation des turbomachines. Or, il se trouve que dans certaines conditions de vol ce régime imposé ne correspond pas au régime optimal des turbomachines, ce qui est défavorable pour la consommation de carburant.

Pour résoudre ce problème, une première solution consiste à régler la vitesse du rotor principal de manière à se rapprocher d'un régime turbine mieux adapté. Cette solution est toutefois limitée puisqu'il n'est pas possible de faire varier cette vitesse au-delà d'une plage réduite sans affecter la sécurité du vol. EP 2 404 775 A divulgue un ensemble de motorisation hybride pour hélicoptère.

Il existe donc un réel besoin pour un ensemble de transmission et un hélicoptère permettant d'optimiser le régime du moteur indépendamment du régime du récepteur et qui soit dépourvus, au moins en partie, des inconvénients inhérents aux configurations connues précitées.

### PRESENTATION DE L'INVENTION

L'invention est définie dans la revendication 1 et des modes de réalisation préférés font l'objet des revendications dépendantes. Le présent exposé concerne un ensemble de transmission pour aéronef comprenant un premier arbre d'entrée, configuré pour recevoir un couple mécanique depuis un premier moteur, un arbre de sortie, configuré pour transmettre un couple mécanique à un récepteur de couple, un premier organe de transmission à au moins deux degrés de mobilité comprenant des première, deuxième et troisième parties mobiles, une première machine électrique réversible de régulation, pilotable, et une première machine électrique réversible d'équilibrage, dans lequel l'arbre d'entrée est accouplé à la première partie mobile, l'arbre de sortie est accouplé à la deuxième partie mobile, la première machine électrique de régulation est accouplée à la troisième partie mobile, et la première machine électrique d'équilibrage est accouplée en série sur l'arbre d'entrée ou l'arbre de sortie.

Dans le présent exposé, on entend par « organe de transmission ayant au moins deux degrés de mobilité » un organe de transmission qui associe au moins trois parties mobiles dont les vitesses de déplacement sont reliées par une seule relation mathématique. Par exemple, dans le cas d'un organe de transmission à deux degrés de mobilité, il faut fixer les vitesses de deux des parties mobiles pour connaître celle de la troisième.

Ainsi, grâce à une telle configuration incluant un organe de transmission à deux degrés de mobilité, il est possible de piloter le régime de la machine de régulation, en positif ou négatif, afin de permettre soit un régime du récepteur variable, le régime du moteur étant constant, soit un régime moteur variable, le régime récepteur étant constant. On peut ainsi obtenir des gains en termes de consommation carburant ou en termes de performances.

En effet, connaissant la vitesse de rotation nominale du récepteur et connaissant la vitesse de rotation souhaitée pour le moteur, la relation mathématique de l'organe de transmission permet de calculer le régime à laquelle la machine électrique de régulation doit être pilotée.

Le pilotage de la machine de régulation peut notamment être réalisé en fonction des conditions de vol afin de suivre les variations du régime nominal du récepteur ou les variations du régime optimal du moteur, ce qui offre des gains importants en consommation et/ou en performances pour toutes les phases de vol.

Lorsque la machine électrique de régulation fonctionne en récepteur, elle convertit la puissance mécanique extraite en puissance électrique qui peut servir aux équipements du bord et/ou à la machine électrique d'équilibrage. La machine électrique d'équilibrage fonctionne alors en moteur en consommant de la puissance électrique pour restituer au récepteur une puissance mécanique équivalente à celle extraite par la machine électrique de régulation.

A l'inverse, lorsque la machine électrique de régulation fonctionne en moteur, elle consomme de la puissance électrique pour injecter un surplus de puissance mécanique au système. La machine électrique d'équilibrage fonctionne alors en récepteur pour convertir en puissance électrique une puissance mécanique équivalente au surplus injecté par la machine électrique de régulation.

Ainsi, il est possible de régler le régime du moteur tout en assurant la transmission efficace de la puissance mécanique depuis le moteur vers le récepteur sans entraîner de perte ou de gain de puissance non souhaité. Toutefois, les machines électriques peuvent également être réglées de manière à obtenir un bilan de puissance non nul dans le but de fournir un surplus de puissance électrique aux équipements de bord ou, au contraire, de fournir un surplus de puissance mécanique au récepteur dans certaines phases de vol.

Dans certains modes de réalisation, l'ensemble comprend en outre un dispositif de stockage d'énergie configuré pour échanger de l'énergie électrique avec la première machine électrique de régulation d'une part et avec la première machine électrique d'équilibrage d'autre part. On peut ainsi stocker l'éventuel surplus d'énergie généré en cas de bilan de puissance non nul entre la machine électrique de régulation et la machine électrique d'équilibrage. Ce dispositif de stockage peut être connecté au réseau électrique du bord.

Dans certains modes de réalisation, l'ensemble comprend en outre une roue libre accouplée en série entre la première machine électrique de régulation et le premier organe de transmission. Ceci est particulièrement utile en cas de défaillance de la machine électrique de régulation lorsque le régime du moteur est supérieur à celui de l'équipement afin d'assurer un rapport de réduction entre le moteur et l'équipement.

Dans certains modes de réalisation, le premier organe de transmission est un train épicycloïdal comprenant un pignon planétaire, des pignons satellites connectés à un porte-satellite, et une couronne.

Le présent exposé concerne également un hélicoptère comprenant un premier moteur, incluant au moins une première turbomachine, un rotor et un ensemble de transmission selon l'un quelconque des modes de réalisation précédents, l'ensemble de transmission étant configuré pour transmettre un couple mécanique provenant du premier moteur vers le rotor. Une telle configuration permet de découpler le régime de la turbomachine de celui du rotor.

Dans certains modes de réalisation, l'hélicoptère comprend en outre une boîte de transmission principale (BTP). Une telle BTP inclut un train épicycloïdal assurant un rapport de réduction entre la turbomachine et le rotor. Dans certains modes de réalisation, cette BTP peut être utilisée comme premier organe de transmission.

Dans certains modes de réalisation, le porte-satellite du premier organe de transmission, distinct de la BTP, constituant sa première partie mobile, est accouplé au premier moteur, la couronne du premier organe de transmission, constituant sa deuxième partie mobile, est accouplée à une entrée de la boîte de transmission principale, et le pignon planétaire du premier organe de transmission, constituant sa troisième partie mobile, est accouplé à la première machine électrique de régulation. Dans cette configuration, l'organe de transmission assure une démultiplication entre la turbomachine et l'entrée de la BTP : cette démultiplication est réglable en pilotant la machine électrique de régulation en vitesse, ce qui permet de piloter la turbomachine à son régime optimal.

Dans certains modes de réalisation, l'hélicoptère comprend en outre un deuxième moteur, incluant au moins une turbomachine, un deuxième organe de transmission, analogue au premier organe de transmission, une deuxième machine électrique réversible de régulation et une deuxième machine électrique réversible d'équilibrage.

Dans certains modes de réalisation, il comprend un dispositif de stockage d'énergie commun configuré pour échanger de l'énergie électrique avec les première et deuxième machines électriques de régulation et avec les première et deuxième machines électriques d'équilibrage. Dans de tels hélicoptères à plusieurs turbomachines, cette configuration permet de mutualiser le dispositif de stockage d'énergie, ce qui diminue les coûts ainsi que le volume et la masse embarquée.

Dans certains modes de réalisation, les première et deuxième machines électriques de régulation forment une unique et même machine électrique de régulation commune accouplée aux troisièmes parties mobiles des premier et deuxième organes de transmission. Cette mutualisation diminue les coûts ainsi que le volume et la masse embarquée.

Dans certains modes de réalisation, les première et deuxième machines électriques d'équilibrage forment une unique et même machine électrique d'équilibrage commune accouplée en série entre une sortie de la boîte de transmission principale et le rotor. Cette mutualisation diminue les coûts ainsi que le volume et la masse embarquée.

Il va de soi que ces différentes mutualisations sont envisageables de manière analogue pour un nombre quelconque de moteurs.

Dans certains modes de réalisation, l'hélicoptère comprend une boîte de transmission principale (BTP) incluant un train épicycloïdal constituant le premier organe de transmission. On profite ainsi du train épicycloïdal présent classiquement dans les BTP, ce qui permet l'économie d'un organe de transmission spécifique supplémentaire.

Dans certains modes de réalisation, le pignon planétaire du premier organe de transmission, constituant sa première partie mobile, est accouplé au premier moteur, le porte-satellite du premier organe de transmission, constituant sa deuxième partie mobile, est accouplé au rotor, et la couronne du premier organe de transmission, constituant sa troisième partie mobile, est accouplée à la première machine électrique de régulation. Dans cette configuration, l'organe de transmission assure une réduction entre la turbomachine et le rotor : cette réduction est réglable en pilotant la machine électrique de régulation en vitesse, ce qui permet de piloter la turbomachine à son régime optimal.

Dans certains modes de réalisation, la première machine électrique d'équilibrage est accouplée en série entre la deuxième partie mobile de l'organe de transmission et ladite entrée de la boîte principale de transmission.

Dans certains modes de réalisation, la première machine électrique d'équilibrage est accouplée en série entre le premier moteur et la première partie mobile de l'organe de transmission.

Dans certains modes de réalisation, la première machine électrique d'équilibrage est accouplée en série entre une sortie de la boîte principale de transmission et le rotor.

Dans certains modes de réalisation, le premier moteur comprend en outre une deuxième turbomachine et une boîte de transmission intermédiaire munie d'une première entrée, accouplée à la première turbomachine, d'une deuxième entrée, accouplée à la deuxième turbomachine, et d'une sortie, accouplée à la première partie mobile du premier organe de transmission.

Les caractéristiques et avantages précités, ainsi que d'autres, apparaîtront à la lecture de la description détaillée qui suit, d'exemples de réalisation de l'ensemble de transmission et de l'hélicoptère proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est un schéma de principe d'un premier exemple d'ensemble de transmission.
La FIG 2 illustre la configuration de l'organe de transmission dans le premier exemple.
La FIG 3 est un graphe représentant différents régimes de vitesse pour le premier exemple en fonction du pilotage choisi.
La FIG 4 est un schéma de principe d'un deuxième exemple d'ensemble de transmission.
La FIG 5 est un schéma de principe d'un troisième exemple d'ensemble de transmission.
La FIG 6 est un schéma de principe d'un quatrième exemple d'ensemble de transmission.
La FIG 7 est un schéma de principe d'un cinquième exemple d'ensemble de transmission.
La FIG 8 illustre la configuration de l'organe de transmission selon un sixième exemple.
La FIG 9 est un graphe représentant différents régimes de vitesse pour le sixième exemple en fonction du pilotage choisi.
La FIG 10 illustre une variante de l'exemple de la FIG 1.

### DESCRIPTION DETAILLEE D'EXEMPLE(S) DE REALISATION

Afin de rendre plus concrète l'invention, des exemples d'ensemble de transmission pour hélicoptère sont décrits en détail ci-après, en référence aux dessins annexés. Il est rappelé que l'invention ne se limite pas à ces exemples.

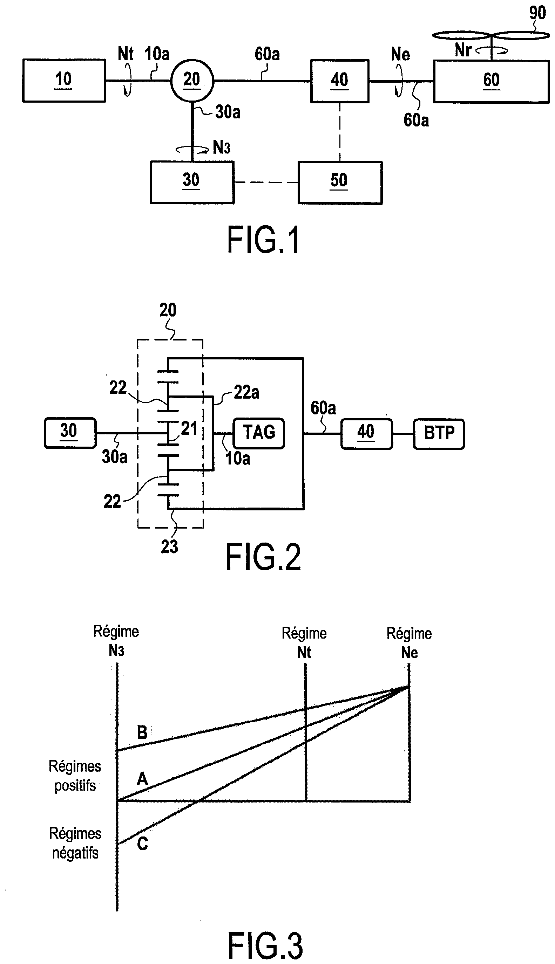

Les FIG 1, 2 et 3 illustrent un premier exemple d'hélicoptère comprenant un rotor 90 entraîné en rotation par une turbine à gaz 10 par l'intermédiaire d'une boîte de transmission principale (BTP) 60. Sur un hélicoptère, la BTP 60 est un ensemble mécanique permettant la transmission de puissance, après réduction de vitesse, du ou des moteurs 10 vers le rotor 90 ; la BTP peut en outre assurer un renvoi d'angle entre l'arbre moteur et l'arbre rotor ainsi que l'alimentation de certains équipements accessoires tels que des pompes ou des alternateurs.

La vitesse de rotation Nr du rotor 90 est imposée par les exigences de vol : cette vitesse Nr impose dès lors la vitesse de rotation Nt de la turbomachine 10 à travers l'ensemble de transmission en fonction du taux de réduction ou de démultiplication de ce dernier, auquel participe notamment celui de la BTP 60.

Dans ce premier exemple, l'ensemble de transmission comprend un train épicycloïdal 20 muni d'un pignon planétaire 21, de pignons satellites 22 montés sur un porte-satellite 22a et d'une couronne 23.

Le porte satellite 22a est accouplé à l'arbre moteur 10a de la turbine à gaz 10. La couronne 23 est accouplée à l'arbre d'entrée 60a de la BTP 60. Le pignon planétaire 21 est quant à lui accouplé via un arbre 30a à une machine électrique réversible pilotable du type moto-variateur 30 dite machine électrique de régulation.

Une deuxième machine électrique réversible dite d'équilibrage 40 est prévue sur l'arbre 60a entre le train épicycloïdal 20 et la BTP 60.

Un dispositif de stockage d'énergie 50 est prévu de manière à pouvoir échanger de l'énergie électrique avec le moto-variateur 30 ainsi qu'avec la machine d'équilibrage 40.

Le fonctionnement de ce premier exemple d'ensemble de transmission va maintenant être expliqué en référence à la FIG 3 qui illustre les vitesses de rotation N3 du moto-variateur 30, Nt de la turbine à gaz 10 et Ne de l'arbre d'entrée 60a de la BTP 60.

Dans le cas où l'on souhaite asservir Nt à un régime égal à Ne au rapport de démultiplication du train épicycloïdal 20 près, le moto-variateur 30 est piloté à régime nul : cette configuration d'équilibre des régimes est représentée par la droite A.

Dans le cas où l'on souhaite asservir Nt à un régime supérieur au régime d'équilibre, la vitesse du moto-variateur 30 est pilotée vers une valeur positive : cette configuration est représentée par la droite B. Dans cette configuration, le moto-variateur 30 prélève de l'énergie mécanique : cette dernière est convertie en électricité, transmise au dispositif de stockage 50, transférée par ce dernier à la machine d'équilibrage 40 qui la reconvertit alors en énergie mécanique et la restitue à l'arbre d'entrée 60a de la BTP 60 afin d'assurer son besoin en puissance.

Dans le cas où l'on souhaite à l'inverse asservir Nt à un régime inférieur au régime d'équilibre, la vitesse du moto-variateur 30 est pilotée vers une valeur négative : cette configuration est représentée par la droite C. Dans cette configuration, le moto-variateur 30 injecte de l'énergie mécanique dans le système : afin d'assurer l'équilibre des puissances, une quantité équivalente d'énergie est prélevée sur l'arbre d'entrée 60a de la BTP 60 par la machine d'équilibrage 40, convertie en électricité et transférée au moto-variateur 30 par le dispositif de stockage 50.

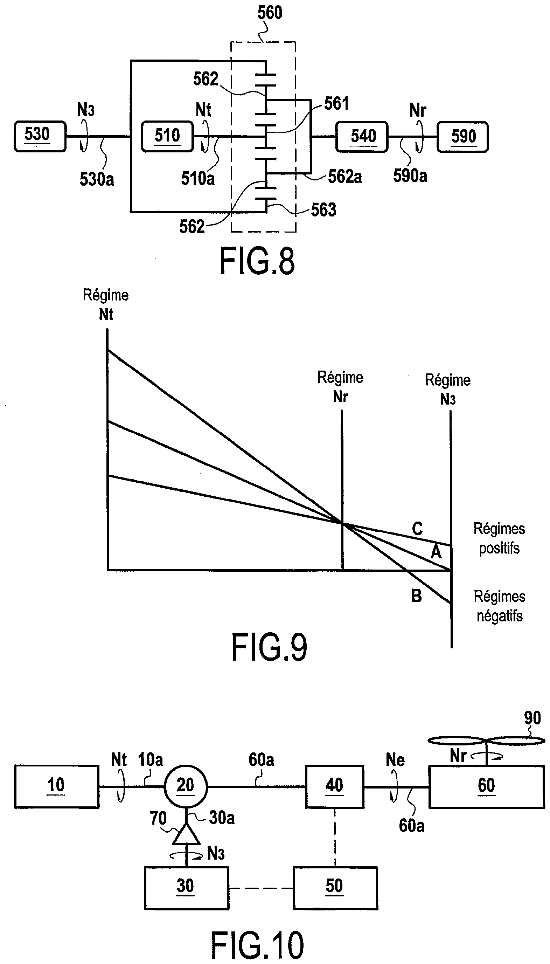

Selon une variante représentée sur la FIG 10, une roue libre 70 peut être prévue sur l'arbre 30a entre la machine électrique de régulation 30 et le train épicycloïdal 20.

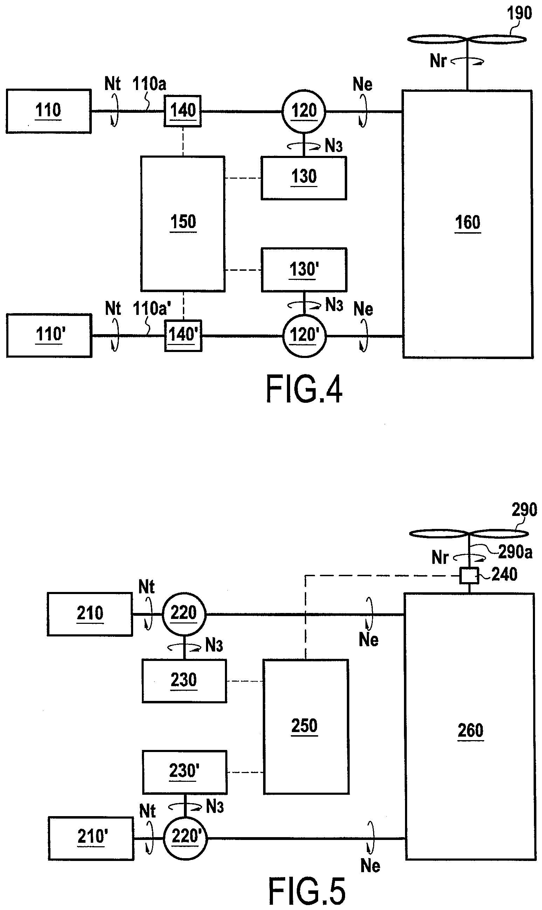

Les FIG 4 à 7 illustrent d'autres variantes de ce premier exemple lorsque l'hélicoptère comprend deux turbines à gaz alimentant un même rotor.

Dans le deuxième exemple représenté à la FIG 4, l'hélicoptère comprend deux lignes de puissance, chacune alimentée par une turbine à gaz 110, 110' qui sont combinées au sein de la BTP 160 afin d'entraîner le rotor 190.

Chaque ligne de puissance comprend un train épicycloïdal 120, 120' et un moto-variateur 130, 130' montés de manière analogue au premier exemple.

Toutefois, dans ce deuxième exemple, l'ensemble de transmission comprend des première et deuxième machines électriques réversibles d'équilibrage 140, 140' prévues sur leur arbre moteur respectif 110a, 110a', c'est-à-dire entre leur turbine à gaz 110, 110' et leur train épicycloïdal 120, 120' respectifs.

En outre, l'ensemble de transmission comprend un unique dispositif de stockage d'énergie 150 capable d'échanger de l'énergie électrique avec le premier moto-variateur 130, le deuxième moto-variateur 130', la première machine électrique d'équilibrage 140 et la deuxième machine électrique d'équilibrage 140'.

Le troisième exemple, représenté à la FIG 5, est analogue au deuxième exemple si ce n'est qu'il comprend une unique machine électrique réversible d'équilibrage 240 prévue sur l'arbre rotor 290a, c'est-à-dire sur l'arbre de sortie de la BTP 260.

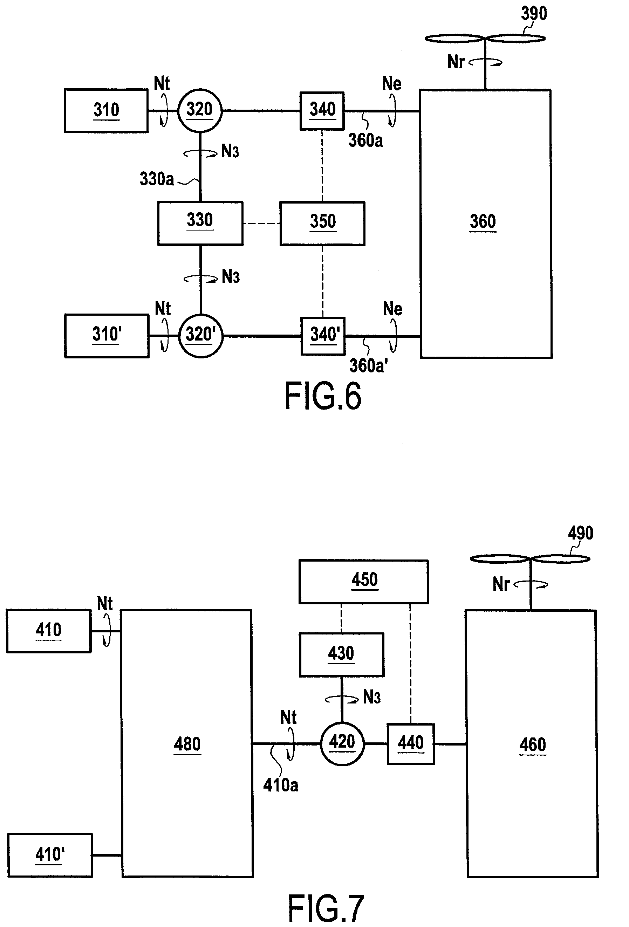

Le quatrième exemple, représenté à la FIG 6, est analogue au deuxième exemple si ce n'est qu'à la place des premier et deuxième moto-variateurs, il comprend un unique moto-variateur 330 commun aux première et deuxième lignes de puissance. Plus précisément, les pignons planétaires 21 des deux trains épicycloïdaux 320, 320' sont accouplés sur un même un arbre 330a avec le moto-variateur commun 330.

De plus, les première et deuxième machines électriques réversibles d'équilibrage 340, 340' sont prévues sur leur arbre d'entrée de la BTP respectif 360a, 360a', c'est-à-dire entre leur train épicycloïdal 320, 320' respectif et la BTP 360.

Dans le cinquième exemple, représenté à la FIG 7, l'ensemble de transmission comprend une boîte intermédiaire de transmission 480 qui comporte une première entrée, accouplée à la première turbine à gaz 410, et une deuxième entrée, accouplée à deuxième turbine à gaz 410'. La boîte intermédiaire de transmission 480 combine ces deux entrées et transmet en sortie la puissance combinée des deux turbines à gaz 410, 410' par un arbre moteur combiné 410a.

On retrouve alors en sortie de la boîte intermédiaire 480 une configuration analogue à celle du premier exemple.

Les FIG 8 et 9 illustrent un sixième exemple d'hélicoptère comprenant un rotor 590 entraîné en rotation par une turbine à gaz 510 par l'intermédiaire d'une boîte de transmission principale (BTP) 560. Dans ce sixième exemple, le train épicycloïdal de la BTP permet la mise en oeuvre de l'invention sans introduction d'un train épicycloïdal supplémentaire.

Le pignon planétaire 561 de la BTP 560 est accouplé à l'arbre moteur 510a de la turbine à gaz 510. Le porte-satellite 562a est accouplé à l'arbre rotor 590a du rotor 590. La couronne 563 est quant à elle accouplée via l'arbre 530a au moto-variateur 530. Une machine électrique réversible d'équilibrage 540 est prévue sur l'arbre rotor 590a entre la BTP 560 et le rotor 590.

Le fonctionnement de ce sixième exemple d'ensemble de transmission va maintenant être expliqué en référence à la FIG 9 qui illustre les vitesses de rotation N3 du moto-variateur 530, Nt de la turbine à gaz 510 et Nr du rotor 590.

Dans le cas où l'on souhaite asservir Nt à un régime égal à Nr au rapport de réduction de la BTP 560 près, le moto-variateur 530 est piloté à régime nul : cette configuration d'équilibre des régimes est représentée par la droite A.

Dans le cas où l'on souhaite asservir Nt à un régime supérieur au régime d'équilibre, la vitesse du moto-variateur 530 est pilotée vers une valeur négative : cette configuration est représentée par la droite B. Dans cette configuration, le moto-variateur 530 prélève de l'énergie mécanique : cette dernière est convertie en électricité, transmise au dispositif de stockage, transférée par ce dernier à la machine d'équilibrage 540 qui la reconvertit alors en énergie mécanique et la restitue à l'arbre rotor 590a afin d'assurer son besoin en puissance.

Dans le cas où l'on souhaite à l'inverse asservir Nt à un régime inférieur au régime d'équilibre, la vitesse du moto-variateur est pilotée vers une valeur positive : cette configuration est représentée par la droite C. Dans cette configuration, le moto-variateur 530 injecte de l'énergie mécanique dans le système : afin d'assurer l'équilibre des puissances, une quantité équivalente d'énergie est prélevée sur l'arbre rotor 590a par la machine d'équilibrage 540, convertie en électricité et transférée au moto-variateur 530 par le dispositif de stockage.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention. En particulier, le présent exposé s'applique aussi bien aux turbines à gaz munies d'une turbine libre qu'aux turbines à gaz munies d'une turbine liée.

## Revendications

1. Hélicoptère comprenant un premier moteur, incluant au moins une première turbomachine (10), un rotor (90) et un ensemble de transmission, l'ensemble de transmission étant configuré pour transmettre un couple mécanique provenant du premier moteur (10) vers le rotor (90),
dans lequel l'ensemble de transmission comprend un premier arbre d'entrée (10a), configuré pour recevoir un couple mécanique depuis le premier moteur (10),
un arbre de sortie (60a), configuré pour transmettre un couple mécanique vers le rotor (90), **caractérisé en ce que** l'ensemble de transmission comprend
un premier organe de transmission (20) à au moins deux degrés de mobilité comprenant des première, deuxième et troisième parties mobiles,
une première machine électrique réversible de régulation (30), pilotable, et
une première machine électrique réversible d'équilibrage (40),
**en ce que** l'arbre d'entrée (10a) est accouplé à la première partie mobile (22a),
l'arbre de sortie (60a) est accouplé à la deuxième partie mobile (23),
la première machine électrique de régulation (30) est accouplée à la troisième partie mobile (21), et
la première machine électrique d'équilibrage (40) est accouplée en série sur l'arbre d'entrée ou l'arbre de sortie (60a).

2. Hélicoptère selon la revendication 1, dans lequel l'ensemble de transmission comprend en outre un dispositif de stockage d'énergie (50) configuré pour échanger de l'énergie électrique avec la première machine électrique de régulation (30) d'une part et avec la première machine électrique d'équilibrage (40) d'autre part.

3. Hélicoptère selon la revendication 1 ou 2, dans lequel l'ensemble de transmission comprend en outre une roue libre (70) accouplée en série entre la première machine électrique de régulation (30) et le premier organe de transmission (20).

4. Hélicoptère selon l'une quelconque des revendications 1 à 3, dans lequel le premier organe de transmission (20) est un train épicycloïdal comprenant un pignon planétaire (21), des pignons satellites (22) connectés à un porte-satellite (22a), et une couronne (23).

5. Hélicoptère selon la revendication 4, comprenant en outre une boîte de transmission principale (60),
dans lequel le porte-satellite (22a) du premier organe de transmission (20), constituant sa première partie mobile, est accouplé au premier moteur (10),
la couronne (23) du premier organe de transmission (20), constituant sa deuxième partie mobile, est accouplée à une entrée (60a) de la boîte de transmission principale (60), et
le pignon planétaire (21) du premier organe de transmission (21), constituant sa troisième partie mobile, est accouplé à la première machine électrique de régulation (30).

6. Hélicoptère selon la revendication 5, comprenant en outre un deuxième moteur, incluant au moins une turbomachine (110'), un deuxième organe de transmission (120'), analogue au premier organe de transmission (120), une deuxième machine électrique réversible de régulation (130'), pilotable, et une deuxième machine électrique réversible d'équilibrage (140'), et
comprenant un dispositif de stockage d'énergie (150) commun configuré pour échanger de l'énergie électrique avec les première et deuxième machines électriques de régulation (130, 130') et avec les première et deuxième machines électriques d'équilibrage (140, 140').

7. Hélicoptère selon la revendication 6, dans lequel les première et deuxième machines électriques de régulation forment une unique et même machine électrique de régulation commune (330) accouplée aux troisièmes parties mobiles des premier et deuxième organes de transmission (320, 320').

8. Hélicoptère selon la revendication 6 ou 7, dans lequel les première et deuxième machines électriques d'équilibrage forment une unique et même machine électrique d'équilibrage commune (240) accouplée en série entre une sortie de la boîte de transmission principale (260) et le rotor (290).

9. Hélicoptère selon la revendication 4, comprenant une boîte de transmission principale (560) incluant un train épicycloïdal constituant le premier organe de transmission,
dans lequel le pignon planétaire (561) du premier organe de transmission (560), constituant sa première partie mobile, est accouplé au premier moteur (510),
le porte-satellite (562a) du premier organe de transmission (560), constituant sa deuxième partie mobile, est accouplé au rotor (590), et
la couronne (563) du premier organe de transmission (560), constituant sa troisième partie mobile, est accouplée à la première machine électrique de régulation (530).

10. Hélicoptère selon l'une quelconque des revendications 1 à 9, dans lequel le premier moteur comprend en outre une deuxième turbomachine (410') et une boîte de transmission intermédiaire (480) munie d'une première entrée, accouplée à la première turbomachine (410), d'une deuxième entrée, accouplée à la deuxième turbomachine (410'), et d'une sortie, accouplée à la première partie mobile du premier organe de transmission (420).

## Patentansprüche

1. Hubschrauber, umfassend ein erstes Triebwerk, das mindestens eine erste Turbomaschine (10), einen Rotor (90) und eine Getriebeanordnung umfasst, wobei die Getriebeanordnung dazu ausgelegt ist, ein mechanisches Drehmoment vom ersten Triebwerk (10) auf den Rotor (90) zu übertragen,
wobei die Getriebeanordnung eine erste Eingangswelle (10a), die dazu ausgelegt ist, ein mechanisches Drehmoment vom ersten Triebwerk (10) aufzunehmen, und
eine Ausgangswelle (60a) umfasst, die dazu ausgelegt ist, ein mechanisches Drehmoment auf den Rotor (90) zu übertragen,
**dadurch gekennzeichnet, dass** die Getriebeanordnung umfasst
ein erstes Getriebeelement (20) mit mindestens zwei Mobilitätsgraden, umfassend erste, zweite und dritte bewegliche Abschnitte,
eine erste steuerbare reversible elektrische Maschine zur Regulierung (30) und
eine erste reversible elektrische Maschine zur Auswuchtung (40),
und dass die Eingangswelle (10a) mit dem ersten beweglichen Abschnitt (22a) gekoppelt ist,
die Ausgangswelle (60a) mit dem zweiten beweglichen Abschnitt (23) gekoppelt ist,
die erste elektrische Maschine zur Regulierung (30) mit dem dritten beweglichen Abschnitt (21) gekoppelt ist und
die erste elektrische Maschine zur Auswuchtung (40) in Reihe mit der Eingangs- oder Ausgangswelle (60a) angeschlossen ist.

2. Hubschrauber gemäß Anspruch 1, wobei die Getriebeanordnung ferner eine Energiespeichervorrichtung (50) umfasst, die dazu ausgelegt ist, elektrische Energie einerseits mit der ersten elektrischen Maschine zur Regulierung (30) und andererseits mit der ersten elektrischen Maschine zur Auswuchtung (40) auszutauschen.

3. Hubschrauber gemäß Anspruch 1 oder 2, wobei die Getriebeanordnung ferner einen Freilauf (70) umfasst, der in Reihe zwischen der ersten elektrischen Maschine zur Regulierung (30) und dem ersten Getriebeelement (20) angeschlossen ist.

4. Hubschrauber gemäß einem der Ansprüche 1 bis 3, wobei das erste Getriebeelement (20) ein Planetengetriebe ist, umfassend ein Sonnenrad (21), Satellitengetrieberäder (22), die mit einem Satellitenträger (22a) verbunden sind, und eine Krone (23).

5. Hubschrauber gemäß Anspruch 4, ferner umfassend ein Hauptgetriebegehäuse (60),
wobei der Satellitenträger (22a) des ersten Getriebeelements (20), der dessen ersten beweglichen Abschnitt bildet, mit dem ersten Triebwerk (10) gekoppelt ist,
die Krone (23) des ersten Getriebeelements (20), die dessen zweiten beweglichen Abschnitt bildet, mit einem Eingang (60a) des Hauptgetriebegehäuses (60) gekoppelt ist, und
das Sonnenrad (21) des ersten Getriebeelements (21), das dessen dritten beweglichen Abschnitt bildet, mit der ersten elektrischen Maschine zur Regulierung (30) gekoppelt ist.

6. Hubschrauber gemäß Anspruch 5, ferner umfassend ein zweites Triebwerk, das mindestens eine Turbomaschine (110'), ein zum ersten Getriebeelement (120) analoges zweites Getriebeelement (120'), eine zweite steuerbare reversible elektrische Maschine zur Regulierung (130') und eine zweite reversible elektrische Maschine zur Auswuchtung (140') umfasst, und
umfassend eine gemeinsame Energiespeichervorrichtung (150), die dazu ausgelegt ist, elektrische Energie mit den ersten und zweiten elektrischen Maschinen zur Regulierung (130,130') und mit den ersten und zweiten elektrischen Maschinen zur Auswuchtung (140,140') auszutauschen.

7. Hubschrauber gemäß Anspruch 6, wobei die erste und die zweite elektrische Maschine zur Regulierung eine einzige gemeinsame elektrische Maschine zur Regulierung (330) bilden, die mit den dritten beweglichen Abschnitten der ersten und zweiten Getriebeelemente (320, 320') gekoppelt ist.

8. Hubschrauber gemäß Anspruch 6 oder 7, wobei die erste und die zweite elektrische Maschine zur Auswuchtung eine einzige gemeinsame elektrische Maschine zur Auswuchtung (240) bilden, die in Reihe zwischen einem Ausgang des Hauptgetriebegehäuses (260) und dem Rotor (290) angeschlossen ist.

9. Hubschrauber gemäß Anspruch 4, umfassend ein Hauptgetriebegehäuse (560), das ein Planetengetriebe aufweist, das das erste Getriebeelement bildet,
wobei das Sonnenrad (561) des ersten Getriebeelements (560), das dessen ersten beweglichen Abschnitt bildet, mit dem ersten Triebwerk (510) gekoppelt ist,
der Satellitenträger (562a) des ersten Getriebeelements (560), der dessen zweiten beweglichen Abschnitt bildet, mit dem Rotor (590) gekoppelt ist, und
die Krone (563) des ersten Getriebeelements (560), die dessen dritten beweglichen Abschnitt bildet, mit der ersten elektrischen Maschine zur Regulierung (530) gekoppelt ist.

10. Hubschrauber gemäß einem der Ansprüche 1 bis 9, wobei das erste Triebwerk ferner eine zweite Turbomaschine (410') und ein Zwischengetriebegehäuse (480) umfasst, das mit einem ersten Eingang, der mit der ersten Turbomaschine (410) gekoppelt ist, einem zweiten Eingang, der mit der zweiten Turbomaschine (410') gekoppelt ist, und einem Ausgang, der mit dem ersten beweglichen Abschnitt des ersten Getriebeelements (420) gekoppelt ist, versehen ist.

## Claims

1. A helicopter comprising a first engine including at least a first turbine engine (10), a rotor (90), and a transmission assembly, the transmission assembly being configured to transmit torque coming from the first engine (10) to the rotor (90);
wherein the transmission assembly comprises a first inlet shaft (10a) configured to receive torque from the first engine (10);
• an outlet shaft (60a) configured to transmit torque to the rotor (90), **characterized in that** the transmission assembly comprises
• a first transmission member (20) with at least two degrees of freedom comprising first, second, and third movable portions;
• a controllable first reversible electrical regulator machine (30); and
• a first reversible electrical balancing machine (40) ;
**in that** the inlet shaft (10a) is coupled to the first movable portion (22a);
• the outlet shaft (60a) is coupled to the second movable portion (23);
• the first electrical regulator machine (30) is coupled to the third movable portion (21); and
• the first electrical balancing machine (40) is coupled in series with the inlet shaft or the outlet shaft (60a).

2. The helicopter according to claim 1, wherein the transmission assembly further comprises an energy storage device (50) configured to exchange electrical energy both with the first electrical regulator machine (30) and also with the first electrical balancing machine (40).

3. The helicopter according to claim 1 or claim 2, wherein the transmission assembly further comprises a freewheel (70) coupled in series between the first electrical regulator machine (30) and the first transmission member (20).

4. The helicopter according to any one of claims 1 to 3, wherein the first transmission member (20) is an epicyclic gear train having a sun gear (21), planet gears (22) connected to a planet carrier (22a), and a ring (23).

5. The helicopter according to claim 4, further comprising a main gearbox (60);
wherein the planet carrier (22a) of the first transmission member (20), constituting its first movable portion, is coupled to the first engine (10);
• the ring (23) of the first transmission member (20), constituting its second movable portion, is coupled to an inlet (60a) of the main gearbox (60); and
• the sun gear (21) of the first transmission member (21), constituting its third movable portion, is coupled to the first electrical regulator machine (30).

6. The helicopter according to claim 5, further comprising a second engine, including at least one turbine engine (110'), a second transmission member (120') analogous to the first transmission member (120), a controllable second reversible electrical regulator machine (130'), and a second reversible electrical balancing machine (140'); and
• comprising a common energy storage device (150) configured to exchange electrical energy with the first and second electrical regulator machines (130, 130') and with the first and second electrical balancing machines (140, 140').

7. The helicopter according to claim 6, wherein the first and second electrical balancing machines form a single common electrical balancing machine (330) that is coupled to the third movable portions of the first and second transmission members (320, 320').

8. The helicopter according to claim 6 or claim 7, wherein the first and second electrical balancing machines form a single common electrical balancing machine (240) coupled in series between the outlet from the main gearbox (260) and the rotor (290).

9. The helicopter according to claim 4, comprising a main gearbox (560) including an epicyclic gear train constituting the first transmission member;
wherein the sun gear (561) of the first transmission member (560), constituting its first movable portion, is coupled to the first engine (510);
• the planet carrier (562a) of the first transmission member (560), constituting its second movable portion, is coupled to the rotor (590); and
• the ring (563) of the first transmission member (560), constituting its third movable portion, is coupled to the first electrical regulator machine (530).

10. The helicopter according to any one of claims 1 to 9, wherein the first engine further comprises a second turbine engine (410') and an intermediate transmission box (480) having a first inlet coupled to the first turbine engine (410), a second inlet coupled to the second turbine engine (410'), and an outlet coupled to the first movable portion of the first transmission member (420).
